# EUROPÄISCHE PATENTSCHRIFT

(11) **EP 2 752 587 B1**
(45) Veröffentlichungstag und Bekanntmachung des Hinweises auf die Patenterteilung: **08.03.2017**
(21) Anmeldenummer: 13150454.0
(22) Anmeldetag: 08.01.2013
(51) Int. Cl.: F16B 13/00, F16B 13/02, F16B 13/08, F16B 19/00, F16B 21/08, H02G 3/00

(54) **Befestigungselement**
Fastening element
Elément de fixation

(43) Veröffentlichungstag der Anmeldung: 09.07.2014
(73) Patentinhaber: KMT Kunststoff- und Metallteile AG, 8340 Hinwil (CH)
(72) Erfinder: Dotzauer, Sandro, 9514 Wuppenau (CH)
(74) Vertreter: Frischknecht, Harry Ralph

(56) Entgegenhaltungen:
- EP-A1- 1 223 650
- WO-A1-98/22739
- WO-A1-2006/049522
- DE-A1- 19 634 383
- FR-A1- 2 589 204
- GB-A- 428 420
- GB-A- 997 711
- US-A- 5 324 151

## Beschreibung

### TECHNISCHES GEBIET

Die vorliegende Erfindung betrifft ein Befestigungselement, insbesondere ein Steckdübel oder ein Dübel, gemäss Oberbegriff des Patentanspruchs 1.

### STAND DER TECHNIK

Seit längerem werden Wandbefestigungsvorrichtungen wie zum Beispiel Dübel verwendet, um Objekte über Rückhaltelaschen sicher an Innenwänden, Aussenwänden oder Verkleidungen anzubringen. Dabei wird der Dübel in einer an sich bekannten Art und Weise in ein vorgebohrtes Loch in der Wand eingeführt. Dabei ist eine Dübelverankerung von Vorteil, die den Dübel sicher in der Wand fixiert und diesen vor einem Zurückrutschen hindert.

US 4,728,238 offenbart ein Befestigungselement mit einem Kopf und einem Schaft, wobei der Schaft eine Mehrzahl von im Allgemeinen flachen, sich axial erstreckenden Oberflächen aufweist. Jede der flachen Oberflächen auf dem Schaft trägt eine Vielzahl von axial abstehenden, flexibel elastischen Flügelelementen. Dabei sind die Flügelelemente winklig angeordnet, die in die Richtung des Kopfes geneigt sind, um die Kraft zum Entfernen des genannten erforderlichen Befestigungselement aus einer Bohrloch im Vergleich zur Kraft, die zum Einführen des Befestigungselements in das Bohrloch benötigt wird, zu erhöhen.

GB 2 049 859 A zeigt eine Befestigungsvorrichtung zur Befestigung von Platten in Leichtbauweise mit einem Grundmaterial. Die Befestigungsvorrichtung umfasst einen Schaftteil, der dabei durch oder zwischen den Platten in eine Bohrung im Basismaterial eindringt. Des Weiteren wird ein Kopfabschnitt beschrieben, der über die Aussenseite der Platten greift, wobei der Schaftteil eine Hülse umfasst, die an den Kopfabschnitt fixiert ist, und der Verankerungsprofile an mindestens einem Teil seiner axialen Länge aufweist und einer gezahnten Stange, die in die Hülse einführbar ist.

In EP 0 365 161 B1 ist ein Befestigungsmittel mit einem Schaft mit einer Längsachse offenbart, wobei der Schaft biegsame Flügel aufweist, die sich im Allgemeinen seitlich vom Schaft und von einem vorderen Ende des Schafts weg erstrecken. Dabei werden auch Anschläge zur Begrenzung der Biegebewegung der Flügel zum vorderen Ende hin offenbart.

EP 1 746 292 A2 zeigt einen Dübel, der einen Kopf und einem Körper umfasst, wobei der Kopf dazu geeignet ist, eine Klammer aufzunehmen. Der Körper umfasst einen zentralen Kern, aus dem ringförmige Rückhaltelaschen mit einem etwas größeren Durchmesser als das Bohrloch austreten, die alle mit radialen Einkerbungen versehen sind. Jede ringförmige Rückhaltelasche bildet dabei ein Paar mit einer ringförmigen Anschlaglasche. Die ringförmige Anschlaglasche hat in dieser Ausführungsform einen Durchmesser, der kleiner als die der ringförmigen Rückhaltelasche und gleich gross der des Bohrloches ist.

Die WO 98/22739 zeigt einen weiteren Dübel, welcher die Gestalt eines Weihnachtsbaums aufweist. Nachteilig an den aus dem Stand der Technik bekannten Dübeln ist die Tatsache, dass diese nur sehr aufwendig herstellbar sind.

### DARSTELLUNG DER ERFINDUNG

Es ist eine Aufgabe der Erfindung, ein Befestigungselement, insbesondere zum Anbringen von Objekten an Wänden anzugeben, welches die Nachteile des Standes der Technik überwindet. Insbesondere soll das Befestigungselement einen grösseren Widerstand gegen Auszugskräfte bereitstellen bzw. mit grösseren Kräften belastbar sein.

Diese Aufgabe wird durch den Gegenstand nach Anspruch 1 gelöst. Demgemäss umfasst ein Befestigungselement zum Einsetzen in eine Öffnung einen Kopfabschnitt mit einem Funktionsbereich, der in seiner Funktion ausserhalb der Öffnung bleibt, einen sich dem Kopfabschnitt anschliessenden, sich entlang einer Mittelachse erstreckenden Halteabschnitt, der sich mindestens teilweise, vorzugsweise ganz, in die Öffnung hinein erstreckt, und einen Zentrierabschnitt, der sich am Kopfabschnitt gegenüberliegenden Ende des Halteabschnittes am Halteabschnitt anschliesst. Der Halteabschnitt weist einen zentralen Kern und eine Mehrzahl von beabstandet zueinander angeordneten Rückhaltelaschen auf, die sich vom zentralen Kern weg erstrecken. Der zentrale Kern weist einen sich entlang der Mittelachse erstreckender Durchbruch auf, wobei durch den Durchbruch der zentrale Kern im Bereich des Durchbruches in mindestens zwei Schenkel aufgeteilt wird, welche beim Einsetzen in einer Öffnung aufeinander zu bewegbar sind. Der Durchbruch erstreckt sich also durch das Befestigungselement bzw. den zentralen Kern hindurch. Die Rückhaltelaschen sind des Weiteren so geformt, dass diese von der Mitte des zentralen Kerns in Richtung des Kopf- und Zentrierabschnittssende hin in Ihrer Länge abnehmen. Hierdurch wird die Form bezüglich der Auszugskräfte weiter optimiert und die Rückhaltelaschen üben im eingebauten Zustand einen gleichmässigen Druck auf die Innenwand der Öffnung aus.

Die Schenkel werden also beim Einsetzen des Befestigungselementes in die dafür vorgesehene Öffnung gespannt und bewirken eine Kraft radial nach aussen, wodurch die Widerstandskraft gegen eine Ausziehbewegung bereitgestellt wird. Folglich kann also durch den Durchbruch bzw. die beiden Schenkel die Auszugskraft massiv erhöht werden. Mit anderen Worten kann auch von einer Art Vorspannung gesprochen werden.

Weiter hat der Durchbruch im zentralen Kern den Vorteil, dass die Oberfläche des Befestigungselementes vergrössert wird, wodurch bei der Herstellung durch Spritzgiessen das Befestigungselement in der Spritzgussform schneller abkühlt. Zudem wird das Gewicht des Befestigungselementes reduziert. Durch die Erhöhung der Oberfläche und die Reduktion des Gewichtes kann das Befestigungselement effizienter hergestellt werden.

Vorzugsweise sind die Schenkel in einer Richtung senkrecht auf die besagte Mittelachse gesehen bogenförmig zur Mittelachse ausgebildet. Die Schenkel beschreiben also in einer Ebene, welche durch die Mittelachse verläuft einen Bogen. Das Zentrum der Krümmung des Bogens liegt vorzugsweise ausserhalb des Befestigungselementes. Durch die bogenförmige Ausbildung kann die besagte radiale Kraft besonders einfach und effizient bereitgestellt werden.

Mit anderen Worten kann gesagt werden, dass die bogenförmigen Schenkel im eingebauten Zustand gespannt werden, sodass eine radiale Haltekraft gegen die Öffnung bereitgestellt wird. Das Befestigungselement wird dadurch fester in der Öffnung verankert und kann grösseren Zugkräften widerstehen.

Vorzugsweise weisen mindestens einer der Schenkel an seiner dem anderen Schenkel zugewandten Seite mindestens ein Anschlagselement auf. Besonders bevorzugt weisen beide Schenkel mindestens ein Anschlagselement auf. Im eingebauten Zustand kommen die beiden Anschlagselemente in Kontakt miteinander und sorgen für einen definierten Abstand zwischen den Schenkel, somit kann das Befestigungselement besonders einfach dimensioniert werden. Weiter sorgt das Anschlagselement, dass die Spannung im eingebauten Zustand vorteilhafterweise aufrecht erhalten bleibt.

Vorzugsweise ist der Durchbruch im Bereich des zentralen Kerns im Wesentlichen elliptisch ausgebildet. Der Durchbruch erstreckt sich bevorzugt im Wesentlichen vom Kopfanschnitt des Befestigungselementes bis zum Zentrierabschnitt. So kommt die radiale Haltekraft möglichst grossflächig innerhalb der Öffnung zur Wirkung.

Vorzugsweise umfasst das Befestigungselement eine Vielzahl von Ausnehmungen, welche die Oberfläche des Befestigungselementes erhöhen, wobei die Ausnehmungen vorzugsweise als nicht-durchgehende Ausnehmungen bereitgestellt werden. Durch die Anordnung der Ausnehmungen kann die Oberfläche des Befestigungselementes erhöht und das Gewicht reduziert werden, was für den Herstellprozess vorteilhaft ist. Das Befestigungselement kühlt bei einem Spritzgussverfahren also schneller ab, wodurch die Zykluszeit verkürzt werden kann.

Vorzugsweise erstrecken sich die Ausnehmungen in die Schenkel zwischen zwei benachbarten Rückhaltelaschen hinein. Alternativ oder zusätzlich erstrecken sich Ausnehmungen zwischen dem Kopfabschnitt und dem Halteabschnitt in das Befestigungselement hinein.

Vorzugsweise ist die Länge der Rückhaltelasche vom zentralen Kern bis zum freien Ende der Rückhaltelasche kleiner als der Abstand in Richtung der Mittelachse gesehen zwischen zwei benachbarten Rückhaltelaschen. Folglich sind die Rückhaltelaschen, die an der Aussenseite der Schenkel angebracht sind, so geformt, dass sie sich im eingebauten Zustand gegenseitig nicht berühren. Dies hat zum Vorteil, dass sich jede Rückhaltelasche individuell mit der Öffnung in Kontakt kommt.

Vorzugsweise stehen der Abstand zwischen zwei benachbarten Rückhaltelaschen und die Länge der Rückhaltelaschen in einem Verhältnis von 1:1 bis 1:0.2 stehen.

Besonders bevorzugt sind die Rückhaltelaschen bezüglich der Mittelachse jeweils zum Kopfabschnitt hin geneigt ausgebildet. Bezüglich der Öffnung, in welche das Befestigungselement eingeschlagen werden soll, ist die Neigung also in Bewegungsrichtung ausgebildet. Vorzugsweise weist die Neigung einen Winkel von 45° bis 70° zur Mittelachse aufweist. Diese Neigung hat zum Vorteil, dass der Dübel auf leichte Art und Weise in die Öffnung eingeschoben werden kann und maximale Widerstandskraft bei Zugwirkung entfalten kann.

Durch die geneigte Anordnung klappen die Rückhaltelaschen bei einer Einwirkung einer Auszugskraft nach aussen auf und erhöhen so den Widerstand gegen die Auszugskraft.

Vorzugsweise liegen die Rückhaltelaschen parallel zueinander.

Das Befestigungselement weist, wie bereits erwähnt, an seinem zur Öffnung der Wand weisenden Ende einen Zentrierabschnitt auf. Der Zentrierabschnitt verbindet dabei die beiden Schenkel des Halteabschnittes. Die Spitze des Zentrierabschnitts weist vorteilhaft mehrere Zentrierelemente auf, welche sich rechtwinklig zur Mittelachse nach aussen erstrecken. Besonders bevorzugt weist der Zentrierabschnitt vier Zentrierelemente auf, die im Winkel von 90° zueinander stehen. Die Zentrierelemente sorgen für die optimale Ausrichtung des Befestigungselementes zur Öffnung, so dass die Mittelachse des Befestigungselementes kollinear zur Mittelachse der Öffnung verläuft und das Befestigungselement einfach eingeschlagen werden kann.

Der Zentrierabschnitt weist im Wesentlichen den Umfang der Öffnung auf, damit das Befestigungselement möglichst passgenau in die Öffnung positionierbar ist.

Der Kopfabschnitt weist einen Funktionsbereich auf, der vorzugsweise eine Öffnung zur Aufnahme von externen Verbindungselementen bereitstellt. Im eingebauten Zustand ragt das Befestigungselement mindestens mit dem Funktionsbereich aus der Öffnung heraus. Der Funktionsbereich stellt vorzugsweise eine Aufnahme für Verbindungselemente bereit. Dadurch können zum Beispiel Bänder, Schnüre, Drähte, Kabelbinder, Haken oder ähnliche Verbindungselemente daran befestigt werden.

Der Kopfabschnitt bzw. der Funktionsbereich ist bevorzugt im Wesentlichen rechteckig geformt, wobei der rechteckige Kopfabschnitt orthogonal zur Mittelachse steht. Dies hat zum Vorteil, dass der Kopfabschnitt damit möglichst flach an der Wand anliegt.

Der Kopfabschnitt weist des Weiteren an seinen Ecken und an seiner Verbindung mit dem Halteabschnitt Abrundungen auf.

Vorzugsweise ist zwischen dem Halteabschnitt und dem Kopfabschnitt ein Stützabschnitt angeordnet, welcher im Wesentlichen zylindrisch ausgebildet ist und eine Stützwirkung gegenüber der Öffnung aufweist. Der Stützabschnitt verleiht dem Befestigungselement vorteilhaft eine Stützwirkung gegenüber der Öffnung. Somit können Biegekräfte besonders gut aufgenommen werden und wirken nicht auf den Halteabschnitt. Der Stützabschnitt sorgt also für Stabilität und Zugfestigkeit im eingebauten Zustand. Der Stützabschnitt weist dabei einen Durchmesser auf, welcher dem vorgesehenen Durchmesser der Öffnung entspricht.

Das Befestigungselement kann auch als Dübel bezeichnet werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht eines Befestigungselement nach einer ersten Ausführungsform von vorne;
- Fig. 2: eine schematische Seitenansicht des Befestigungselementes der Fig. 1;
- Fig. 3: eine schematische Aufsicht des Befestigungselementes der Fig. 1 von hinten;
- Fig. 4: eine schematische Ansicht auf das Befestigungselement der Fig. 1 entlang der Mittelachse;
- Fig. 5: eine schematische perspektivische, oberseitige Darstellung des Befestigungselementes der Fig. 1;
- Fig. 6: eine schematische perspektivische, unterseitige Darstellung des Befestigungselementes der Fig. 1;
- Fig. 7: eine Schnittdarstellung durch die Schnittlinie VII-VII der Fig. 1;
- Fig. 8: eine Schnittdarstellung durch die Schnittlinie VIII-VIII der Fig. 2; und
- Fig. 9: eine Ansicht des Befestigungselementes der Fig. 1 im eingebauten Zustand.

### BESCHREIBUNG BEVORZUGTER AUSFÜHRUNGSFORMEN

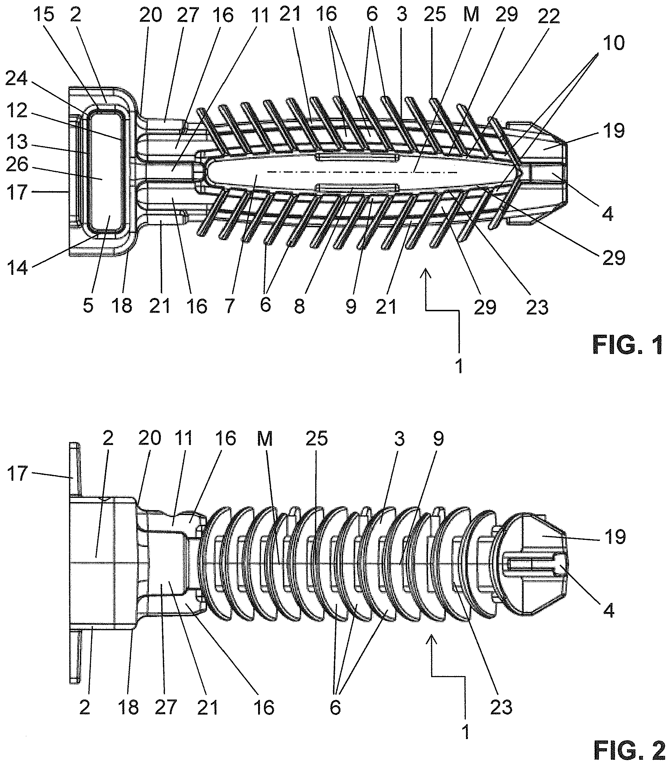

Figur 1 zeigt eine bevorzugte Ausführungsform eines Befestigungselementes 1 gemäss einer Ausführungsform der Erfindung. Das erfindungsgemässe Befestigungselement 1 wird beispielweise im Innen- oder Aussenbau eingesetzt.

Das Befestigungselement 1 umfasst einen Kopfabschnitt 2, einen sich dem Kopfabschnitt 2 anschliessenden Halteabschnitt 3 und einen Zentrierabschnitt 4. Dem Kopfabschnitt 2 schliesst sich dabei der Halteabschnitt 3 und dem Halteabschnitt 3 schliesst sich der Zentrierabschnitt 4 an.

Der Kopfabschnitt 2 weist einen Funktionsbereich 5 auf, welcher in seiner Funktion ausserhalb der Öffnung 28 bleibt, in welche das Befestigungselement 1 eingesetzt bzw. eingeschlagen wird.

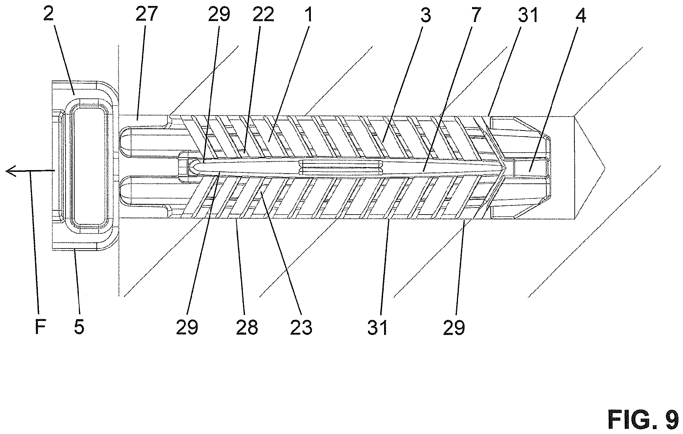

Dem Kopfabschnitt 2 schliesst sich einen sich entlang einer Mittelachse M erstreckenden Halteabschnitt 3 an. Der Halteabschnitt 3 erstreckt sich dabei im mit der Öffnung in Verbindung stehenden Zustand mindestens teilweise in die Öffnung 28 hinein. Vorzugsweise ragt der gesamte Halterabschnitt 3 in die Öffnung ein. Der Halteabschnitt 3 weist einen zentralen Kern 9 und eine Mehrzahl von beabstandet zueinander angeordneten Rückhaltelaschen 6, die sich vom zentralen Kern 9 weg erstrecken, auf. Über die Rückhaltelaschen 6 und den zentralen Kern 9 bzw. den Halteabschnitt 3 wird eine Widerstandskraft gegen eine Ausziehbewegung bereitgestellt. Die Ausziehbewegung wird mit dem Pfeil F in der Figur 9 gezeigt.

Der Zentrierabschnitt 4 schliesst sich am gegenüberliegenden Ende des Kopfabschnittes 2 am Halteabschnitt 3 an. Der Zentrierabschnitt 4 hat die Funktion, dass das Befestigungselement 1 vor der Montage in der Öffnung 28 zentriert werden kann, so dass die Montage vereinfacht wird. Der Zentrierabschnitt 4 kann aber auch vergleichsweise kurz ausgebildet sein, so dass dieser auch als Teil des Halteabschnittes 3 angesehen werden kann.

Der zentrale Kern 9 weist einen sich entlang der Mittelachse M erstreckenden Durchbruch 7 auf. Durch den Durchbruch 7 wird der zentrale Kern 9 im Bereich des Durchbruches in mindestens zwei Schenkel 22, 23 aufgeteilt. Die Schenkel 22, 23 werden dann beim Einsetzen des Befestigungselementes 1 in eine Öffnung 28 aufeinander zu bewegt. Der Durchbruch 7 wird also beim Einsetzen des Befestigungselementes in die Öffnung 28 mindestens teilweise aufgehoben.

Durch die Verformung der Schenkel 22, 23 wird eine in radialer Richtung zur Mittelachse M wirkende Kraft auf die Innenseite der Öffnung 28 bereitgestellt. Diese Radialkraft stellt dabei einen Widerstand gegen eine auf das Befestigungselement 1 wirkende Auszugskraft bereit.

Die Haltekraft gegen die Auszugskraft wird im vorliegenden Fall durch die Radialkraft und durch die Widerstandskraft der Rückhaltlaschen 6 bereitgestellt.

Der Durchbruch 7 erstreckt sich, wie von der Figur 1 erkannt werden kann, vollständig durch den Halteabschnitt 3 hindurch und kann daher auch als Fenster bezeichnet werden.

Der Halteabschnitt 3 verbindet den Kopfabschnitt 2 mit dem zentralen Kern 9 des Befestigungselementes 1. Es wird eine einstückige Struktur bereitgestellt. Das Befestigungselement 1 ist also einstückig ausgebildet.

Das Befestigungselement 1 oder der Dübel 1 besteht aus einem formbaren Material, insbesondere aus einem Kunststoff, wie einem Polymer. Besonders bevorzugt besteht das Befestigungselement aus Polyamid. Unter formbar wird in diesem Zusammenhang verstanden, dass sich das Befestigungselement 1 beim Einesetzen die Öffnung wie oben beschrieben leicht verformt. Es werden also die Rückhaltelaschen 6 und die beiden Schenkel 22, 23 leicht verformt. Für die Herstellung des Befestigungselement 1 ist es wichtig, dass sich der Kunststoff für den Spritzguss eignet. Ebenso könnte das Befestigungselement 1 für Anwendung wo hohe Zugkräfte wirken, aus Metall oder anderen formbaren Materialien geformt werden.

Die mindestens zwei Schenkel 22, 23 sind in einer Richtung senkrecht auf die Mittelachse M gesehen bogenförmig zur Mittelachse M ausgebildet. In der Figur 1 ist die besagte Richtung senkrecht auf die Ebene des Zeichnungsblattes. Mit anderen Worten gesagt, beschreiben die Schenkel 22, 23 in der Ebene des Zeichnungsblattes der Figur 1 einen Bogen. Das Zentrum der Krümmung der bogenförmigen Schenkel 22, 23 liegt vorzugsweise ausserhalb des Befestigungselementes 1. Es handelt sich also um einen vergleichsweise grossen Krümmungsradius.

Vorzugsweise weisen die Schenkel 22, 23 an ihrer sich zugewandten Seite mindestens ein Anschlagselement 8 auf. Das Anschlagselement 8 erstreckt sich von einer Innenwand 29 des Schenkels 22 bzw. 23 in den Durchbruch 7 hinein. Wenn sich das Befestigungselement 1 im eingebauten Zustand befindet, also in die Öffnung 28 eingesetzt ist, kommen die Anschlagselemente 8 miteinander in Kontakt, wie dies in der Figur 9 dargestellt ist.

Der Durchbruch 7 weist, wie in der Figur 1 erkannt werden kann, im Bereich des zentralen Kerns 9 in einer Richtung rechtwinklig auf die Mittelachse M betrachtet einen im Wesentlichen elliptischen Querschnitt auf. Bezüglich auftretenden Spannungen hat sich dieser Querschnitt als besonders vorteilhaft erwiesen.

Der Durchbruch 7 erstreckt sich im Wesentlichen vom Kopfabschnitt 2 des Befestigungselementes 1 bis zum Zentrierabschnitt 4. Der Durchbruch 7 erstreckt sich also im Wesentlichen durch den gesamten Halteabschnitt 3.

Von den Figuren 1, 2, 3, 5 und 6 ist ersichtlich, dass das Befestigungselement 1 gemäss der vorliegenden Ausführungsform eine Vielzahl von Ausnehmungen 16 aufweist. Die Ausnehmungen 16 dienen im Wesentlichen der Erhöhung der Oberfläche, aber auch der Reduzierung des Volumens des Befestigungselementes 1. Hierdurch lässt sich das Befestigungselement 1 sehr effizient herstellen.

Die Ausnehmungen 16 sind vorzugsweise als nicht-durchgehende Ausnehmungen 16 bereitgestellt. Das heisst, dass es sich im Wesentlichen um Sacklöcher oder Auskerbungen handelt, welche sich nicht durch das Befestigungselement 1 hindurch erstrecken.

Vorzugsweise werden zwischen zwei benachbarten Rückhaltelaschen 6 jeweils eine Ausnehmung 16 angeordnet. Die Ausnehmung 16 wird dann durch die Rückhaltlaschen 6 und zwei Randbereiche 30 des entsprechenden Schenkels 22, 23 begrenzt. Mit anderen Worten kann gesagt werden, dass die Ausnehmungen durch jeweils einen Mittelsteg 10 und einen Seitensteg 21, welche mit den Rückhaltelaschen 6 in Verbindung stehen, ausgeformt werden. Mittelsteg 10 und Seitensteg 21 erstrecken sich dabei parallel zum Schenkel 22, 23 über dessen ganze Länge, wodurch der gesamte zentrale Kern 9 vorteilhaft stabilisiert wird.

Weiter weist das Befestigungselement 1 im Bereich zwischen dem Kopfabschnitt 2 und dem Halteabschnitt 3 weitere Ausnehmungen 16 auf, die sich in das Befestigungselement 1 hinein erstrecken. Diese Ausnehmungen 16 liegen in einem Abschnitt, der auch als Stützabschnitt bezeichnet werden kann und werden durch einen Steg 11 begrenzt.

Der Kopfabschnitt 2 umfasst einen Funktionsbereich 5, welcher in der Figur 1 besodners gut gezeigt wird. Hier weist der Funtkionsabschnitt 5 die Gestalt einer Öffnung 26 auf. Mit anderen Worten kann gesagt werden, dass die Öffnung 26 ein ösenartiges Verbindungselement bereitstellt, sodass der Kopfabschnitt 2 als Befestigungselement benutzt werden kann. Die Öffnung weist hier jeweils zwei parallele Seiten 12/13, 14/15 auf, so dass eine Öffnung 26 mit rechteckigem Querschnitt bereitgestellt wird. Es ist denkbar, dass der Funktionsbereich 5 auch in jeglicher anderer geometrischer Querschnittsform ausgestaltet sein kann, um als Befestigungselement zu dienen.

Um eine grössere Auflagefläche für Elemente, die mit der Öffnung 26 verbunden werden sollen, zu bieten, weist der Kopfabschnitt 2 seitlich des Funktionsbereichs 5 zwei Halteflügel 17 auf, die an der Öffnung des Funktionsbereichs 5 abstehen. Diese Halteflügel werden insbesondere in der Figur 2 gezeigt.

Die Ecken im Innern der Öffnung 26 des Funktionsbereichs, sowie die Ecken an der Verbindungsstelle zwischen Kopfabschnitt 2 und Halteabschnitt 3 weisen jeweils Abrundungen 18, 20, 24 auf, die den Kopfabschnitt bei Verformung stabilisieren und widerstandsfähiger machen. Zudem wird die Kerbwirkung minimiert.

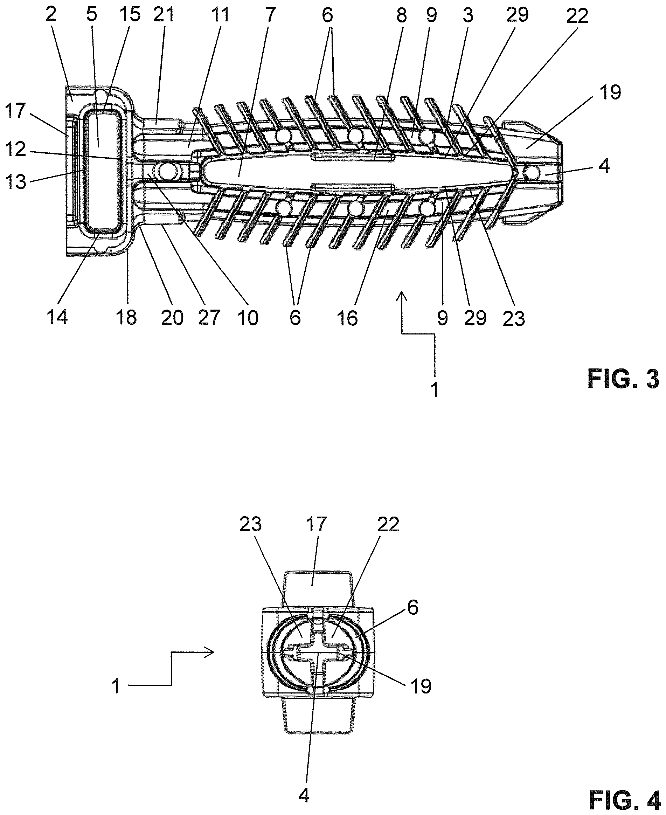

Für eine sichere Verankerung des Befestigungselementes 1 in der Öffnung sind nebst den beiden Schenkel 22, 23 auch die Rückhaltelaschen 6 verantwortlich. Anhand der Figuren 1 und 3 werden die Rückhaltelaschen 6 noch genauer erläutert. Die Rückhaltelaschen 6 stehen von den beiden Schenkeln 22, 23 von der Mittelachse M gesehen nach aussen hin ab.

Hier stehen die Rückhaltelaschen 6 geneigt zur Mittelachse M. Die Neigung ist dabei in Richtung der Einschlagrichtung ausgebildet, so dass die Rückhaltelaschen 6 beim Einschlagen in die Öffnung 28 nach hinten in Richtung des Kopfabschnittes 2 umgelenkt werden. Mit anderen Worten gesagt sind die Rückhaltelaschen 6 in Richtung des Kopfabschnittes geneigt. Die Neigung der Rückhaltelaschen 6 weist bevorzugt mit einem Winkel von 45° bis 70° zur Mittelachse M bzw. zum Schenkel in Richtung des Kopfabschnitts ab, in diesem Ausführungsbeispiel liegt der Winkel insbesondere bei 60°.

Die Rückhaltelaschen 6 sind als nicht-umlaufende Laschen ausgebildet, weil diese im Bereich des Durchbruches 7 unterbrochen sind.

Die Rückhaltelaschen 6 erstrecken sich vom zentralen Kern 9 vom Halteabschnitt 3 weg und enden mit einem freien Ende 25. Die Distanz zwischen der Aussenseite des zentralen Kerns 9 bis hin zum freien Ende 25 wird als Länge der Rückhaltelaschen 6 definiert. Diese Länge ist kleiner als der Abstand zwischen zwei benachbarten Rückhaltelaschen 6 in Richtung der Mittelachse M gesehen. Folglich berühren sich die Rückhaltelaschen 6 in eingebauten Zustand gegenseitig nicht. Dies hat den Vorteil, dass jede Rückhaltelasche 6 optimal mit der Innenseite der Öffnung 28, in welche das Befestigungselement 1 eingeschlagen wird, in Kontakt kommt.

Der Abstand zwischen den Rückhaltelaschen 6 und die Länge der Rückhaltelaschen 6 stehen vorteilhaft in einem Verhältnis von 1:1 bis 1:0.2. Der Abstand ist also grösser als die Länge der Rückhaltelaschen 6.

Von der Mitte des zentralen Kerns 9 nehmen in diesem Ausführungsbeispiel die Rückhaltelaschen 6 in Richtung des Kopf- und Zentrierabschnittssende hin in Ihrer Länge im Wesentlichen ab, um im eingebauten Zustand unter radialer Haltekraft eine gleichmässige Verteilung der radialen Haltekraft zu erlauben.

Figur 2 zeigt eine schematische Seitenansicht des Befestigungselementes 1, wobei besonders auch die Form der Rückhaltelaschen 6 gezeigt wird. Diese sind vorteilhaft abgerundet ausgebildet, sodass das Befestigungselement 1 leicht in die Öffnung eingeführt werden kann. Die Rundung der Rückhaltelaschen 6 wird durch den Durchbruch 7 begrenzt. Die Rückhaltelaschen 6 ragen also nicht in den Durchbruch 7 hinein bzw. über den Durchbruch 7 hinweg.

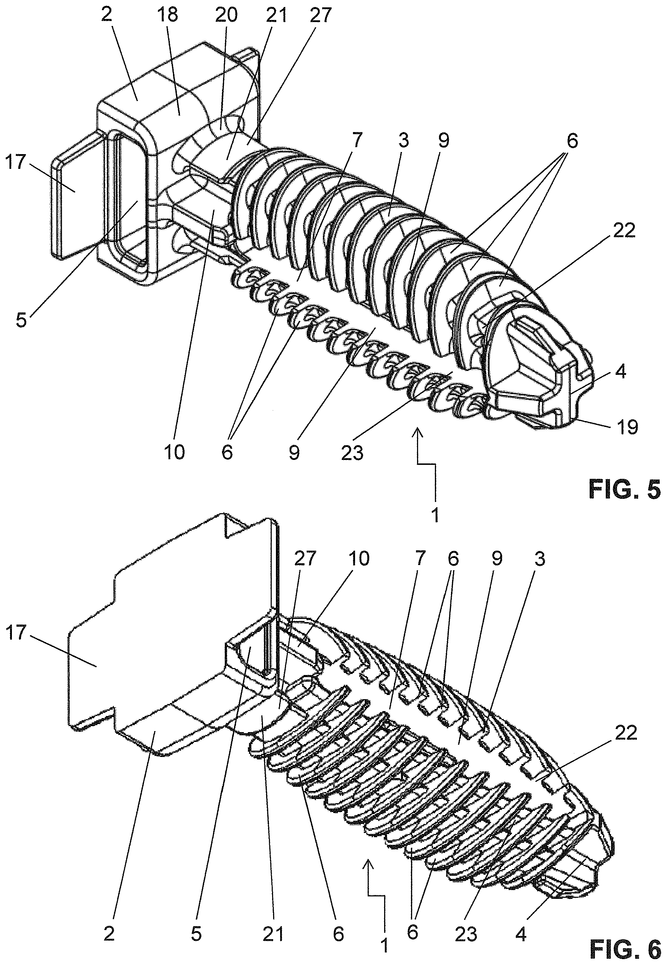

Die Spitze des Zentrierabschnitts 4 weist gemäss dieser Ausführungsform vorzugsweise vier Zentrierelemente 19 auf, welche hier im 90° Winkel stehen. Diese Zentrierelemente 19 dienen dazu, dem Befestigungselement 1 an seiner Spitze ausreichend Zugfestigkeit und Widerstandsfähigkeit beim Einführen des Dübels in die Öffnung zu verleihen. Es ist auch denkbar, dass der Zentrierabschnitt 4 sogar mehr oder weniger als vier Zentrierelemente 19 aufweist. Der Zentrierabschnitt 4 weist dabei im Wesentlichen den Umfang der Öffnung auf, damit der Zentrierabschnitt 4 idealerweise möglichst passgenau in die Öffnung einführbar ist. Die Anordnung der Stützabschnitte 27 wird in den Figuren 4 und 5 besonders gut gezeigt.

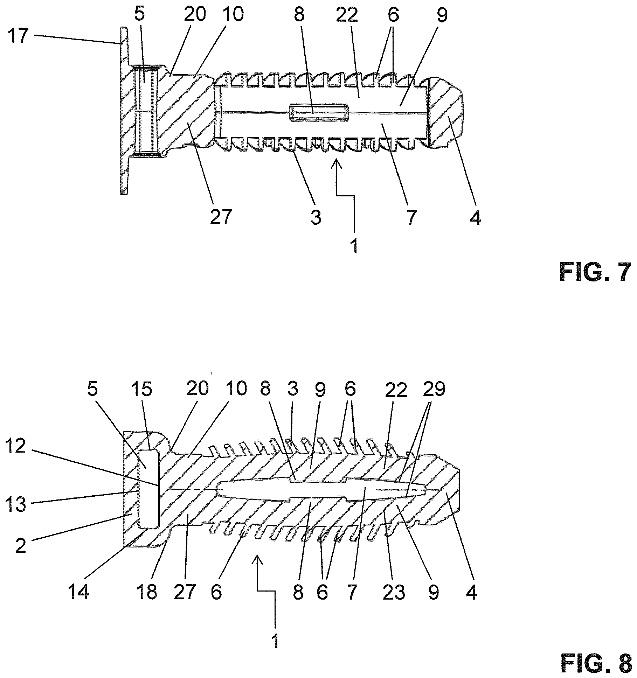

In den Schnittdarstellungen der Figuren 7 und 8 wird die Anordnung des Anschlagselementes 8 schön gezeigt.

In der Figur 9 wird das Befestigungselement 1 in eingeschlagenen Zustand gezeigt. Das Befestigungselement 1 ragt dabei mit dem Halteabschnitt 3 und dem Zentrierabschnitt 4 in die Öffnung 28 ein und steht mit der Seitenwand 31 der Öffnung 28 in Kontakt. In dieser Darstellung kann gut erkannt werden, dass die beiden Anschlagselemente 8 miteinander in Kontakt kommen.

Zwischen dem Kopfabschnitt 2 und dem Halteabschnitt 3 weist das Befestigungselement 1 einen optionalen Stützabschnitt 27 auf. Der Stützabschnitt 27 ist im Wesentlichen zylindrisch ausgebildet und stellt eine Stützwirkung gegenüber der Öffnung 28 bereit.

Die Erfindung ist nicht auf das vorstehende Ausführungsbeispiel beschränkt, und eine Vielzahl an Abwandlungen ist möglich. So können insbesondere die Form des Kopfabschnitts auf beliebige Art und Weise entsprechend dem Stand der Technik ausgestaltet sein.

### BEZUGSZEICHENLISTE

- 1: Befestigungselemente
- 2: Kopfabschnitt
- 3: Halteabschnitt
- 4: Zentrierabschnitt
- 5: Funktionsbereich
- 6: Rückhaltelaschen
- 7: Durchbruch
- 8: Anschlagselement
- 9: zentraler Kern
- 10: Mittelsteg
- 12: Seitenwand
- 13: Seitenwand
- 14: Seitenwand
- 15: Seitenwand
- 16: Ausnehmungen
- 17: Halteflügel
- 18: Abrundung
- 19: Zentrierelemente
- 20: Abrundung
- 21: Seitensteg
- 22: Schenkel
- 23: Schenkel
- 24: Abrundung
- 25: freies Ende
- 26: Öffnung
- 27: Stützabschnitt
- 28: Öffnung
- 29: Innenwand
- 30: Randbereiche
- 31: Seitenwand

## Patentansprüche

1. Befestigungselement (1) zum Einsetzen in eine Öffnung, umfassend einen Kopfabschnitt (2) mit einem Funktionsbereich (5), der in seiner Funktion ausserhalb der Öffnung bleibt, einen sich dem Kopfabschnitt (2) anschliessenden, sich entlang einer Mittelachse (M) erstreckenden Halteabschnitt (3), der sich mindestens teilweise in die Öffnung hinein erstreckt, wobei der Halteabschnitt (3) einen zentralen Kern (9) und eine Mehrzahl von beabstandet zueinander angeordnete Rückhaltelaschen (6), die sich vom zentralen Kern (9) weg erstrecken, aufweist, und einem Zentrierabschnitt (4), der sich am Halteabschnitt (3) gegenüber des Kopfabschnittes (2) anschliesst,
wobei der zentrale Kern (9) einen sich entlang der Mittelachse erstreckenden Durchbruch (7) aufweist, wobei durch den Durchbruch (7) der zentrale Kern (9) im Bereich des Durchbruches (7) in mindestens zwei Schenkel (22; 23) aufgeteilt wird, welche beim Einsetzen in einer Öffnung aufeinander zu bewegbar sind,
**dadurch gekennzeichnet, dass** von der Mitte des zentralen Kerns (9) die Rückhaltelaschen (6) in Richtung des Kopfabschnittes (2) und/oder des Zentrierabschnittes in ihrer Länge abnehmen.

2. Befestigungselement (1) nach Anspruch 1, **dadurch gekennzeichnet, dass** die Schenkel (22, 23) in einer Richtung rechtwinklig auf die Mittelachse (M) gesehen bogenförmig zur Mittelachse (M) ausgebildet sind, wobei das Zentrum der Krümmung des bogenförmigen Schenkels (22, 23) vorzugsweise ausserhalb des Befestigungselementes (1) liegt.

3. Befestigungselement (1) nach einem der vorgehenden Ansprüche, **dadurch gekennzeichnet, dass** mindestens einer Schenkel (22, 23) an seiner dem anderen Schenkel (23, 22) zugewandten Seite mindestens ein Anschlagselement (8) aufweist, wobei das Anschlagselement (8) im eingebauten Zustand mit dem anderen Schenkel (23, 22) in Kontakt kommt oder wobei die Anschlagselemente (8) im eingebauten Zustand vorzugsweise miteinander in Kontakt kommen.

4. Befestigungselement (1) nach einem der vorgehenden Ansprüche, **dadurch gekennzeichnet, dass** der Durchbruch (7) im Bereich des zentralen Kerns in einer Richtung rechtwinklig auf die Mittelachse (M) betrachtet im Wesentlichen elliptisch ausgebildet ist.

5. Befestigungselement (1) nach einem der vorgehenden Ansprüche, **dadurch gekennzeichnet, dass** der Durchbruch (7) sich im Wesentlichen vom Kopfanschnitt (2) des Befestigungselementes (1) bis zum Zentrierabschnitt (4) erstreckt.

6. Befestigungselement (1) nach einer der vorgehenden Ansprüche, **dadurch gekennzeichnet, dass** das Befestigungselement (1) eine Vielzahl von Ausnehmungen (16) aufweist, welche die Oberfläche des Befestigungselementes (1) erhöhen, wobei die Ausnehmungen (16) vorzugsweise als nicht-durchgehende Ausnehmungen bereitgestellt werden.

7. Befestigungselement (1) nach Anspruch 6, **dadurch gekennzeichnet, dass** die Ausnehmungen (16) sich in die Schenkel (22, 23) zwischen zwei benachbarten Rückhaltelaschen (6) hinein erstrecken, und/oder dass zwischen dem Kopfabschnitt (2) und dem Halteabschnitt (3) Ausnehmungen (16) sich in das Befestigungselement (1) hinein erstrecken.

8. Befestigungselement (1) nach einem der vorhergehenden Ansprüche, **dadurch gekennzeichnet, dass** die Länge der Rückhaltelasche (6) vom zentralen Kern (9) bis zum freien Ende (25) der Rückhaltelasche (6) kleiner ist als der Abstand in Richtung der Mittelachse (M) gesehen zwischen zwei benachbarten Rückhaltelaschen (6).

9. Befestigungselement (1) nach einem der vorhergehenden Ansprüche, **dadurch gekennzeichnet, dass** der Abstand zwischen zwei benachbarten Rückhaltelaschen (6) und die Länge der Rückhaltelaschen (6) in einem Verhältnis von 1:1 bis 1:0.2 stehen.

10. Befestigungselement (1) nach einem der vorhergehenden Ansprüche, **dadurch gekennzeichnet, dass** die Rückhaltelaschen (6) bezüglich der Mittelachse (M) jeweils zum Kopfabschnitt (2) hin geneigt ausgebildet sind, wobei die Neigung vorzugsweise einen Winkel von 45° bis 70° zur Mittelachse (M) aufweist.

11. Befestigungselement (1) nach einem der vorhergehenden Ansprüche, **dadurch gekennzeichnet, dass** die Rückhaltelaschen (6) parallel zueinander liegen.

12. Befestigungselement (1) nach einem der vorhergehenden Ansprüche, **dadurch gekennzeichnet, dass** die Spitze des Zentrierabschnitts (4) mehrere, vorzugsweise vier, Zentrierelemente (19) aufweist, welche sich im Querschnitt gesehen bezüglich der Mittelachse (M) senkrecht nach aussen erstrecken.

13. Befestigungselement (1) nach einem der vorhergehenden Ansprüche, **dadurch gekennzeichnet, dass** der Kopfabschnitt (2) einen Funktionsbereich (5) aufweist, der vorzugsweise eine Öffnung (26) zur Aufnahme von externen Verbindungselementen bereitstellt.

14. Befestigungselement (1) nach einem der vorhergehenden Ansprüche, **dadurch gekennzeichnet, dass** der Kopfabschnitt (2) im Wesentlichen rechteckig geformt ist, wobei der rechteckige Kopfabschnitt (2) orthogonal zur Mittelachse steht und/oder dass die Ecken des Kopfabschnitts (2) Abrundungen (18; 20) aufweisen.

15. Befestigungselement (1) nach einem der vorhergehenden Ansprüche, **dadurch gekennzeichnet, dass** zwischen dem Halteabschnitt (3) und dem Kopfabschnitt (2) ein Stützabschnitt (27) angeordnet ist, welcher im Wesentlichen zylindrisch ausgebildet ist und eine Stützwirkung gegenüber der Öffnung aufweist.

## Claims

1. A fastening element (1) for insertion into an opening, comprising a head portion (2) with a functional area (5), which remains in its function outside the opening, a holding portion (3) adjoining the head portion (2) and extending along a middle axis (M), which protrudes at least partially into the opening, wherein the holding portion (3) comprises a central core (9) and a plurality of retention tabs (6) being arranged at a distance from each other, which protrude away from the central core (9), and a centering portion (4), which adjoins the holding portion (3) opposite to the head portion (2),
wherein the central core (9) comprises a breakthrough (7) extending along the middle axis, wherein the central core (9) in the region of the breakthrough (7) is divided by the breakthrough (7) into at least two legs (22; 23), which are movable towards each other when being inserted into an opening,
**characterized in that** the retention tabs (6) decrease in their length from the center of the central core (9) towards the head portion (2) and/or the centering portion.

2. The fastening element (1) according to claim 1, **characterized in that** the legs (22, 23), when seen in a direction perpendicular to the middle axis (M), are designed in the shape of an arc towards the middle axis (M), wherein the center of the curvature of the arched legs (22, 23) lies preferably outside of the fastening element (1).

3. The fastening element (1) according to any one of the preceding claims, **characterized in that** at least one of the legs (22, 23) on its side facing the other leg (23, 22) comprises at least one abutment element (8), wherein the abutment element (8) in the installed state comes into contact with the other leg (23, 22) or wherein the abutment elements (8) in the installed state preferably come into contact with each other.

4. The fastening element (1) according to any one of the preceding claims, **characterized in that** the breakthrough (7) in the region of the central core, when seen in a direction perpendicular to the middle axis (M), is designed essentially elliptically.

5. The fastening element (1) according to any one of the preceding claims, **characterized in that** the breakthrough (7) essentially extends from the head portion (2) of the fastening element (1) to the centering portion (4).

6. The fastening element (1) according to any one of the preceding claims, **characterized in that** the fastening element (1) comprises a plurality of recesses (16), which increase the surface of the fastening element (1), wherein the recesses (16) are preferably provided as non-continuous recesses.

7. The fastening element (1) according to claim (6), **characterized in that** the recesses (16) extend into the legs (22, 23) between two neighboring retention tabs (6), and/or **in that** recesses (16) extend into the fastening element (1) between the head portion (2) and the holding portion (3).

8. The fastening element (1) according to any one of the preceding claims, **characterized in that** the length of the retention tab (6) from the central core (9) to the free end (25) of the retention tab (6) is smaller than the distance between two neighboring retention tabs (6) when seen in the direction of the middle axis (M).

9. The fastening element (1) according to any one of the preceding claims, **characterized in that** the distance between two neighboring retention tabs (6) and the length of the retention tabs (6) are in a ratio of 1:1 to 1:0.2.

10. The fastening element (1) according to any one of the preceding claims, **characterized in that** the retention tabs (6) are in each case designed to be inclined towards the head portion (2) with respect to the middle axis (M), wherein the inclination preferably comprises an angle to the middle axis (M) of 45° to 70°.

11. The fastening element (1) according to any one of the preceding claims, **characterized in that** the retention tabs (6) are arranged parallel to one another.

12. The fastening element (1) according to any one of the preceding claims, **characterized in that** the tip of the centering portion (4) comprises several, preferably four, centering elements (19), which extend perpendicularly outwards with respect to the middle axis (M) when seen in the cross-section.

13. The fastening element (1) according to any one of the preceding claims, **characterized in that** the head portion (2) comprises a functional area (5) which preferably provides an opening (26) for the receiving of external connecting elements.

14. The fastening element (1) according to any one of the preceding claims, **characterized in that** the head portion (2) is essentially shaped rectangularly, wherein the rectangular head portion (2) is orthogonal to the middle axis (M) and/or **in that** the corners of the head portion (2) comprise roundings (18; 20).

15. The fastening element (1) according to any one of the preceding claims, **characterized in that** a support section (27) is arranged between the holding portion (3) and the head portion (2), which is essentially of a cylindrical shape and exerts a supporting effect against the opening.

## Revendications

1. Elément de fixation (1) pour l'insertion dans une ouverture, comprenant une section de tête (2) ayant une domaine fonctionnel (5), qui reste en dehors de l'ouverture dans sa fonction, une section d'arrêt (3) s'étendant le long d'un axe longitudinal (M) et se raccordant à la section de tête (2), qui s'étend au moins partiellement à l'intérieur de l'ouverture , où la section d'arrêt (3) présente un noyau central (9) et une pluralité de languettes de retenue (6) disposées de manière espacées l'une par rapport à l'autre qui s'étendent en s'éloignant du noyau central (9), et une section de centrage (4) se raccordant à la section d'arrêt (3) de manière opposée à la section de tête (2), où le noyau central (9) présente une percée s'étendant le long de l'axe central, où à cause de la percée (7), le noyau central (9) est divisé en au moins deux branches (22, 23) dans le domaine de la percée (7), lesquelles peuvent être déplacées l'une vers l'autre lors de l'insertion dans une ouverture,
**caractérisé en ce que** les languettes de retenue (6) diminuent en longueur en direction de la section de tête (2) et/ou de la section de centrage depuis le milieu du noyau central (9).

2. L'élément de fixation (1) selon la revendication 1, **caractérisé en ce que** les branches (22, 23) sont formées de manière arquée en une direction perpendiculaire par rapport à l'axe central (M), où le centre de la courbure de la branche (22, 23) arquée est préférablement en dehors de l'élément de fixation (1).

3. Elément de fixation (1) selon l'une des revendications précédentes, **caractérisé en ce que** au moins une branche (22, 23) présente au moins un l'élément de butée (8) sur son côté faisant face à l'autre branche (23, 22), où l'élément de butée (8) vient en contact avec l'autre branche (23, 22) dans un état incorporé où les éléments de butée (8) viennent en contact préférablement l'un avec l'autre dans un état incorporé.

4. L'élément de fixation (1) selon une des revendications précédentes, **caractérisé en ce que** la percée (7) est formée dans un domaine du noyau central de manière essentiellement elliptique vu perpendiculairement vers l'axe central (M).

5. L'élément de fixation (1) selon une des revendications précédentes, **caractérisé en ce que** la percée (7) s'étend essentiellement depuis la section de tête (2) de l'élément de fixation (1) jusqu'à la section de centrage (4).

6. L'élément de fixation (1) selon une des revendications précédentes, **caractérisé en ce que** l'élément de fixation (1) présente une pluralité d'évidements (16), lesquels augmentent la surface de l'élément de fixation (1), où les évidements (16) sont préférablement fournis comme évidements non-traversants.

7. L'élément de fixation (1) selon la revendication 6, **caractérisé en ce que** les évidements (16) s'étendent dans les branches (22, 23) entre deux languettes de retenue (6) avoisinantes, et/ou que entre la section de tête (2) et la section de retenue (3) des évidements (16) s'étendent vers l'intérieur de l'élément de fixation (1).

8. L'élément de fixation selon une des revendications précédentes, **caractérisé en ce que** la longueur de la languette de rétention (6) est inférieure depuis le noyau central (9) jusque à l'extrémité libre (25) de la languette de rétention (6) à l'espace entre deux languettes de rétention (6) avoisinantes vu en direction de l'axe central (M).

9. L'élément de fixation (1) selon une des revendications précédentes, **caractérisé en ce que** l'espace entre deux languettes de rétention (6) avoisinantes et la longueur des languettes de retenue (6) sont en relation de 1:1 jusque à 1:0.2.

10. L'élément de fixation (1) selon une des revendications précédentes, **caractérisé en ce que** les languettes de rétention (6) sont formées par rapport à l'axe central (M) de manière inclinée vers la section de tête respectivement, où l'inclinaison présent préférablement un angle de 45° à 70° par rapport à l'axe central (M).

11. L'élément de fixation (1) selon une des revendications précédentes, **caractérisé en ce que** les languettes de rétention (6) sont disposées de manière parallèle l'une par rapport à l'autre.

12. L'élément de fixation (1) selon une des revendications précédentes, **caractérisé en ce que** la pointe de la section de centrage (4) présente plusieurs, préférablement quatre éléments de centrage (19), lesquels vu en section transversale, par rapport à l'axe central (M), s'étendent la manière perpendiculaire vers l'extérieur.

13. L'élément de fixation (1) selon une des revendications précédentes, **caractérisé en ce que** la section de tête (2) présente un domaine fonctionnel (5) qui fournit préférablement une ouverture (26) pour la réception d'éléments de connexion externes.

14. Un élément de fixation (1) selon une des revendications précédentes, **caractérisé en ce que** la section de tête (2) est essentiellement formée de manière rectangulaire, où la section de tête (2) rectangulaire est orthogonale à l'axe central et/ou que les angles de la section de tête (2) présent des arrondissements (18 ; 20).

15. L'élément de fixation (1) selon une des revendications précédentes, **caractérisé en ce que** une section d'appui (27) est disposée entre la section de retenue (3) et la section de tête (2), laquelle est essentiellement formée de manière cylindrique et présente une action d'appui par rapport à l'ouverture.
